# DEMANDE DE BREVET EUROPEEN

(11) **EP 2 829 790 A2**
(43) Date de publication de la demande: **28.01.2015**
(21) Numéro de dépôt: 14177816.7
(22) Date de dépôt: 21.07.2014
(51) Int. Cl.: F21S 8/10

(54) **Système d'éclairage associant une lumière blanche et une lumière d'une autre couleur**

(30) Priorité: 23.07.2013 FR 1357220
(71) Demandeur: VALEO VISION, 93012 Bobigny Cedex (FR)
(72) Inventeur: Albou, Pierre, 75013 PARIS (FR); Godbillon, Vincent, 75011 PARIS (FR); Puente, Jean-Claude, 93190 LIVRY GARGAN (FR)

(57) **Abrégé**

Ce système d'éclairage comporte une première source lumineuse primaire (12) émettant un rayonnement lumineux accordé (L1), et un dispositif (16) de conversion de longueur d'onde recevant le rayonnement accordé (L1).

Le rayonnement accordé (L1) est accordé par rapport au dispositif (16) de conversion de longueur d'onde de façon que le dispositif de conversion (16) recevant le rayonnement accordé réémette un rayonnement de lumière blanche.

Le système comprend de plus une seconde source lumineuse primaire (14) émettant un second rayonnement lumineux incident désaccordé (L2), et des moyens (18) de répartition spatiale du rayonnement incident désaccordé (L2) pour former un rayonnement désaccordé réparti.

Le rayonnement incident désaccordé (L2) est désaccordé par rapport au dispositif (16) de conversion de longueur d'onde de façon que ce dispositif de conversion (16) recevant le rayonnement désaccordé réparti diffuse un rayonnement de lumière de même couleur que celle du rayonnement incident désaccordé (L2).

## Description

La présente invention concerne le domaine technique des systèmes d'éclairage pour véhicules automobiles, et plus particulièrement un système d'éclairage associant une lumière blanche et une lumière d'une autre couleur.

On connaît déjà dans l'état de la technique, notamment d'après le document EP 2 063 170, un système d'éclairage pour véhicule automobile comportant une source lumineuse primaire, émettant un rayonnement lumineux incident, et un dispositif de conversion de longueur d'onde à matériau phosphorescent recevant ce rayonnement lumineux.

Le rayonnement lumineux émis par la source primaire est accordé par rapport au dispositif de conversion de longueur d'onde de façon que le matériau phosphorescent de ce dispositif de conversion recevant le rayonnement accordé réémette un rayonnement de lumière blanche.

Dans EP 2 063 170, la source lumineuse primaire est une source laser qui peut comprendre, par exemple, une diode laser. Une source laser habituelle pour le type d'application envisagé dans EP 2 063 170 émet un faisceau de rayonnement collimaté de diamètre compris par exemple entre 0,1 et 2 mm. Des moyens de répartition spatiale du rayonnement incident accordé permettent de former un rayonnement accordé réparti.

Le dispositif de conversion de longueur d'onde comprend un substrat en matériau transparent sur lequel est déposée une couche mince de matériau phosphorescent. Ce matériau phosphorescent reçoit le rayonnement accordé réparti et réémet le rayonnement de lumière blanche.

On notera que l'homme du métier entend par « matériau phosphorescent » un matériau ayant un comportement phosphorescent et constitué par différents éléments chimiques ne contenant pas nécessairement de phosphore.

Dans EP 2 063 170, les moyens de répartition spatiale du rayonnement incident accordé comprennent des moyens de balayage recevant le rayonnement incident et le répartissant spatialement sur une surface de balayage du matériau phosphorescent du dispositif de conversion de longueur d'onde.

Ces moyens de balayage comprennent un micro-miroir mobile autour de deux axes.

Le rayonnement lumineux renvoyé par les moyens de balayage traverse le dispositif de conversion de longueur d'onde lequel réémet le rayonnement de lumière blanche.

Le système d'éclairage décrit dans EP 2 063 170 comporte en outre un système optique d'imagerie recevant la lumière blanche réémise par le dispositif de conversion de longueur d'onde et projetant cette lumière blanche en avant du véhicule pour former un faisceau d'éclairage, par exemple un faisceau de feu de route, de feu de croisement ou de feu diurne (appelé encore « DRL » conformément au sigle anglais pour « Daytime Running Light »). Dans un tel système d'éclairage, le dispositif de conversion de longueur d'onde est situé au voisinage d'un plan focal du système optique d'imagerie.

Les fonctions de feu diurne, de feu de route ou de feu de croisement sont réalisées habituellement avec de la lumière blanche. Toutefois, dans un véhicule automobile, d'autres fonctions d'éclairage que celles précédemment citées, utilisent une lumière d'une autre couleur que la lumière blanche, par exemple une lumière orange pour réaliser une fonction de clignotant. Les différentes fonctions d'éclairage utilisant différentes couleurs de lumière sont généralement réalisées dans le véhicule par différents moyens spécifiques à chaque fonction.

L'invention a notamment pour but de limiter, dans un véhicule automobile, le nombre de moyens utilisés pour réaliser différentes fonctions d'éclairage utilisant différentes couleurs de lumière.

A cet effet, l'invention a pour objet un système d'éclairage pour véhicule automobile comportant :
- une première source lumineuse primaire émettant un premier rayonnement lumineux, dit rayonnement accordé, et
- un dispositif de conversion de longueur d'onde à matériau phosphorescent recevant le rayonnement accordé,
   le rayonnement accordé étant accordé par rapport au dispositif de conversion de longueur d'onde de façon que le matériau phosphorescent du dispositif de conversion recevant le rayonnement accordé réémette un rayonnement de lumière blanche,
   caractérisé en ce qu'il comprend de plus :
- une seconde source lumineuse primaire émettant un second rayonnement lumineux, dit rayonnement incident désaccordé,
- des moyens de répartition spatiale du rayonnement incident désaccordé pour former un rayonnement désaccordé réparti,
le rayonnement incident désaccordé étant désaccordé par rapport au dispositif de conversion de longueur d'onde de façon que le matériau phosphorescent de ce dispositif de conversion recevant le rayonnement désaccordé réparti diffuse un rayonnement de lumière de même couleur que celle du rayonnement incident désaccordé.

On observe en effet que lorsque le rayonnement accordé, par exemple de couleur bleue, impacte le matériau phosphorescent du dispositif de conversion, ce dernier crée de la lumière de couleur complémentaire pour former de la lumière blanche. Par contre, lorsque le rayonnement désaccordé, par exemple de couleur orange, impacte le matériau phosphorescent du dispositif de conversion, ce dernier diffuse ce rayonnement désaccordé en conservant sa couleur.

Ainsi, en utilisant un premier rayonnement accordé par rapport au dispositif de conversion de longueur d'onde et un second rayonnement désaccordé par rapport à ce dispositif de conversion de longueur d'onde, on peut réaliser des fonctions d'éclairage de différentes couleurs, à savoir une fonction d'éclairage à lumière blanche, grâce au rayonnement accordé avec le dispositif de conversion de longueur d'onde, et une fonction d'éclairage d'une autre couleur, par exemple à lumière orange, grâce au rayonnement désaccordé avec le dispositif de conversion de longueur d'onde.

Le dispositif de conversion de longueur d'onde est donc commun aux deux fonctions, d'une part, de réalisation d'un éclairage à lumière blanche (par exemple pour feu diurne (DRL), feu de route ou feu de croisement) et, d'autre part, de réalisation d'un éclairage à lumière de couleur différente, par exemple à lumière orange (notamment pour clignotant). On limite donc ainsi les moyens utilisés, dans un véhicule automobile, pour réaliser différentes fonctions d'éclairage utilisant différentes couleurs de lumière.

Un système d'éclairage selon l'invention peut en outre comporter l'une ou plusieurs des caractéristiques optionnelles suivantes :
- les première et seconde sources lumineuses primaires comprennent chacune une source laser ;
- la première source lumineuse primaire émet un rayonnement accordé, dit rayonnement incident accordé,
   le système comprenant de plus des moyens de répartition spatiale du rayonnement incident accordé pour former un rayonnement accordé réparti,
   le matériau phosphorescent du dispositif de conversion de longueur d'onde recevant le rayonnement accordé réparti ;
- la première source lumineuse primaire comprend une source laser formant support pour le matériau phosphorescent du dispositif de conversion de longueur d'onde et émettant le rayonnement accordé à travers ce matériau phosphorescent ;
- les moyens de répartition spatiale du rayonnement incident désaccordé ou accordé comprennent des moyens choisis parmi :
   - des moyens de balayage recevant le rayonnement incident désaccordé ou accordé et le répartissant spatialement sur une surface de balayage du matériau phosphorescent du dispositif de conversion de longueur d'onde, et
   - des moyens de formation d'un faisceau volumique désaccordé ou accordé éclairant le matériau phosphorescent du dispositif de conversion de longueur d'onde ;
- les moyens de balayage comprennent un micro-miroir mobile autour de deux axes sensiblement orthogonaux ou deux micro-miroirs mobiles autour de deux axes respectifs sensiblement orthogonaux ;
- le rayonnement accordé a une longueur d'onde comprise entre 400 nanomètres et 500 nanomètres, et de préférence voisine de 450 ou 460 nanomètres, ces longueurs d'onde correspondant à des couleurs allant du bleu au proche ultraviolet ;
- le système d'éclairage comprend un système optique d'imagerie recevant la lumière réémise par le dispositif de conversion de longueur d'onde et projetant cette lumière réémise, par exemple en avant du véhicule, pour former un faisceau d'éclairage, le dispositif de conversion de longueur d'onde étant situé au voisinage d'un plan focal du système optique d'imagerie.

L'invention sera mieux comprise à la lecture de la description qui va suivre, donnée uniquement à titre d'exemple et faite en se référant aux dessins annexés dans lesquels :
- la figure 1 est une vue schématique partiellement en perspective d'un système d'éclairage selon l'invention ;
- la figure 2 est une vue schématique en perspective de moyens de répartition spatiale du rayonnement désaccordé ou accordé destinés à équiper le système d'éclairage représenté sur la figure 1.

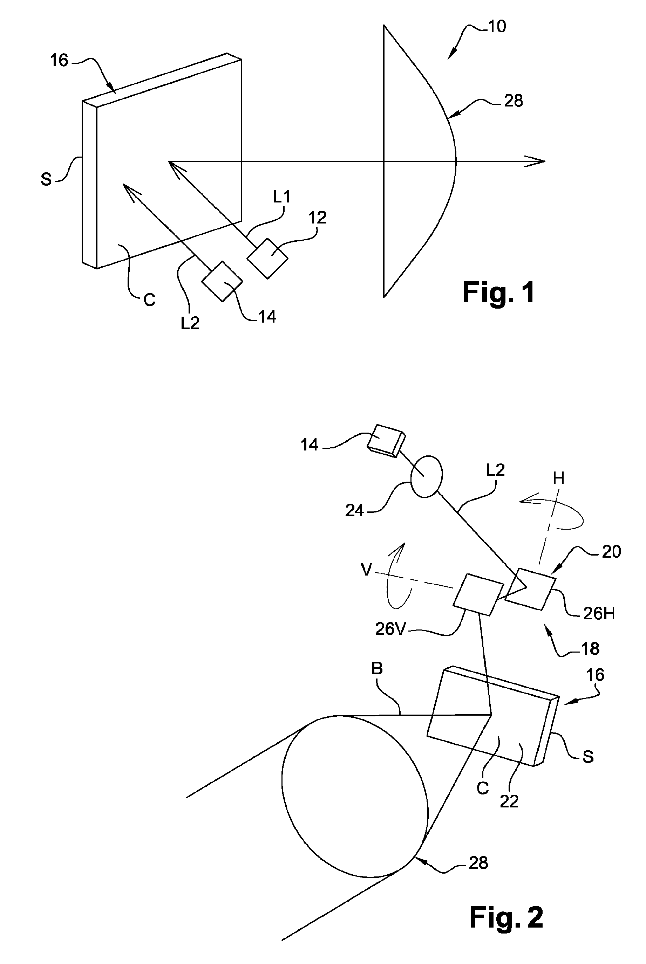

On a représenté sur la figure 1 un système d'éclairage selon l'invention désigné par la référence générale 10.

Le système d'éclairage 10 comprend une première source lumineuse primaire 12, de type classique, émettant un premier rayonnement lumineux, dit rayonnement accordé.

Le système d'éclairage 10 comprend également une seconde source lumineuse primaire 14, de type classique, émettant un second rayonnement lumineux, dit rayonnement désaccordé.

La première source lumineuse primaire 12 comporte une source laser formée, dans l'exemple décrit, par une diode laser émettant un rayonnement lumineux accordé L1, dont la longueur d'onde est comprise entre 400 nanomètres et 500 nanomètres, et de préférence voisine de 450 ou 460 nanomètres. Ces longueurs d'onde correspondent à des couleurs allant du bleu au proche ultraviolet.

La seconde source lumineuse primaire 14 comporte une source laser formée, dans l'exemple décrit, par une diode laser émettant un rayonnement lumineux désaccordé L2 dont la longueur d'onde correspond à une couleur orange.

La première 12 ou seconde 14 source lumineuse primaire peut, en variante, comprendre un dispositif optique combinant en un seul faisceau plusieurs rayonnements lasers, par exemple à l'aide de fibres optiques ou de dispositifs tirant profit des polarisations différentes de différentes sources laser.

Le système d'éclairage 10 comprend également un dispositif 16 de conversion de longueur d'onde, à matériau phosphorescent, destiné à recevoir le rayonnement accordé L1 et le rayonnement désaccordé L2, généralement séparément ou, le cas échéant, à la fois.

Le dispositif 16 de conversion de longueur d'onde comprend, par exemple, un substrat S formant miroir qui est recouvert par une couche C de matériau phosphorescent.

Le rayonnement accordé L1 est accordé par rapport au dispositif de conversion de longueur d'onde de façon que le matériau phosphorescent du dispositif de conversion recevant le rayonnement accordé réémette un rayonnement de lumière blanche.

En effet, de façon connue, chaque point de la couche de matériau phosphorescent du dispositif 16 recevant le rayonnement accordé L1 (qui, provenant d'une source laser, est monochromatique et cohérent) réémet, un rayonnement lumineux de longueur d'onde différente, et notamment une lumière qui peut être considérée comme « blanche », c'est-à-dire qui comporte une pluralité de longueurs d'onde entre environ 400 nanomètres et 800 nanomètres, c'est-à-dire comprises dans le spectre de la lumière visible. Cette émission de lumière blanche se produit selon un diagramme d'émission lambertienne, c'est-à-dire avec une luminance uniforme dans toutes les directions.

On notera que, la couche de matériau phosphorescent C étant déposée sur le substrat S qui réfléchit le rayonnement laser accordé ou désaccordé, on est assuré que le rayonnement laser qui n'aurait pas rencontré de grain de matériau phosphorescent avant d'avoir traversé complètement la couche de matériau phosphorescent C, pourra rencontrer un grain de matériau phosphorescent après avoir été réfléchi par le substrat réfléchissant S.

Le rayonnement incident désaccordé L2 est désaccordé par rapport au dispositif 16 de conversion de longueur d'onde de façon que le matériau phosphorescent de ce dispositif de conversion 16 recevant le rayonnement désaccordé diffuse un rayonnement de lumière de même couleur que celle du rayonnement incident désaccordé.

Le système d'éclairage 10 comprend encore des moyens 18 de répartition spatiale du rayonnement incident désaccordé L2 pour former un rayonnement désaccordé réparti.

Un exemple de réalisation des moyens de répartition spatiale 18 est représenté sur la figure 2.

Ainsi, sur la figure 2, on voit que les moyens de répartition spatiale 18 comprennent des moyens de balayage 20 recevant le rayonnement incident désaccordé L2 et le répartissant spatialement sur une surface de balayage 22 du matériau phosphorescent C du dispositif 16 de conversion de longueur d'onde.

Suivant une variante non représentée, les moyens de répartition spatiale 18 pourraient comprendre des moyens de formation d'un faisceau volumique désaccordé éclairant le matériau phosphorescent C du dispositif 16 de conversion de longueur d'onde.

Éventuellement, des moyens optiques classiques de focalisation 24 sont intercalés entre la seconde source lumineuse primaire 14 et les moyens de répartition spatiale 18.

Les moyens de balayage 20, illustrés sur la figure 2, comprennent des premier 26H et second 26V micro-miroirs mobiles autour de premier H et second V axes respectifs sensiblement orthogonaux.

Le premier micro-miroir 26H reçoit directement le rayonnement incident désaccordé L2 et le réfléchit vers le second micro-miroir 26V. Ce second micro-miroir 26V reçoit directement le rayonnement provenant du premier micro-miroir 26H et le réfléchit vers la surface de balayage 22. Les deux micro-miroirs 26H, 26V sont pilotés de façon connue en soi afin que le rayonnement désaccordé réparti issu du second micro-miroir 26V balaye la surface 22 du dispositif 16 de conversion de longueur d'onde.

Selon une variante non représentée, les moyens de balayage 20 pourraient comprendre un seul micro-miroir mobile autour de deux axes sensiblement orthogonaux.

Le cas échéant un système optique d'imagerie classique 28 reçoit la lumière réémise par le dispositif 16 de conversion de longueur d'onde et projette cette lumière, par exemple en avant du véhicule, pour former un faisceau d'éclairage.

On notera que le dispositif 16 de conversion de longueur d'onde est situé au voisinage d'un plan focal du système optique d'imagerie 28.

On notera également que le système de balayage 16 et le système optique d'imagerie 28 sont disposés du même côté réfléchissant du miroir formé par le substrat S.

Dans l'exemple décrit, le système d'éclairage 10 comprend des moyens de répartition spatiale du rayonnement incident accordé L1 pour former un rayonnement accordé réparti qui sont similaires (et donc non représentés) aux moyens de répartition spatiale 18 du rayonnement incident désaccordé L2. Ainsi, le matériau phosphorescent C du dispositif 16 de conversion de longueur d'onde reçoit ce rayonnement accordé réparti et réémet le rayonnement de couleur blanche.

Les moyens de répartition spatiale du rayonnement incident accordé L1 comprennent, comme pour le rayonnement désaccordé L2, des moyens de balayage recevant le rayonnement incident accordé et le répartissant spatialement sur la surface de balayage 22 du matériau phosphorescent du dispositif 16 de conversion de longueur d'onde.

Les moyens de balayage du rayonnement accordé L1 comprennent, comme pour le rayonnement désaccordé L2, deux micro-miroirs mobiles autour de deux axes respectifs sensiblement orthogonaux ou un micro-miroir mobile autour de deux axes sensiblement orthogonaux.

Selon une variante non représentée, la source laser de la première source lumineuse primaire 12 remplace le substrat S du dispositif de conversion 16 est forme un support pour le matériau phosphorescent C de ce dispositif de conversion 16 en émettant le rayonnement accordé à travers ce matériau phosphorescent.

Le dispositif d'éclairage 10 selon l'invention permet donc, d'une part, la réalisation d'un éclairage à lumière blanche et, d'autre part, la réalisation d'un éclairage à lumière de couleur différente, par exemple à lumière orange.

Pour la réalisation d'un éclairage à lumière blanche (par exemple pour feu diurne (DRL), feu de route ou feu de croisement), l'utilisateur active la première source lumineuse primaire 12 (accordé), la seconde source lumineuse primaire 14 étant désactivée.

Pour la réalisation d'un éclairage à lumière orange (par exemple pour clignotant), l'utilisateur active la seconde source lumineuse primaire 14 (désaccordé), la première source lumineuse primaire 12 étant désactivée.

On peut, le cas échéant, prévoir de pouvoir activer simultanément les première 12 et seconde 14 source lumineuses primaires.

On notera que l'invention est particulièrement avantageuse pour réaliser deux fonctions, respectivement de feu diurne (DRL) et de clignotant, avec des moyens communs à ces deux fonctions, notamment un dispositif de conversion de longueur d'onde 16 commun à ces deux fonctions, et un système optique d'imagerie 28 commun à ces deux fonctions. En effet, les formes des faisceaux d'un feu diurne et d'un clignotant sont en général similaires, si bien qu'il est avantageux de réaliser ces formes de faisceau avec des moyens optiques communs.

## Revendications

1. Système d'éclairage pour véhicule automobile comportant :
- une première source lumineuse primaire (12) émettant un premier rayonnement lumineux, dit rayonnement accordé (L1), et
- un dispositif (16) de conversion de longueur d'onde à matériau phosphorescent (C) recevant le rayonnement accordé (L1),
le rayonnement accordé (L1) étant accordé par rapport au dispositif (16) de conversion de longueur d'onde de façon que le matériau phosphorescent (C) du dispositif de conversion (16) recevant le rayonnement accordé réémette un rayonnement de lumière blanche,
**caractérisé en ce qu'**il comprend de plus :
- une seconde source lumineuse primaire (14) émettant un second rayonnement lumineux, dit rayonnement incident désaccordé (L2),
- des moyens (18) de répartition spatiale du rayonnement incident désaccordé (L2) pour former un rayonnement désaccordé réparti,
le rayonnement incident désaccordé (L2) étant désaccordé par rapport au dispositif (16) de conversion de longueur d'onde de façon que le matériau phosphorescent (C) de ce dispositif de conversion (16) recevant le rayonnement désaccordé réparti diffuse un rayonnement de lumière de même couleur que celle du rayonnement incident désaccordé (L2).

2. Système d'éclairage selon la revendication 1, les première (12) et seconde (14) sources lumineuses primaires comprennent chacune une source laser.

3. Système d'éclairage selon la revendication 1 ou 2, dans lequel la première source lumineuse primaire (12) émet un rayonnement accordé, dit rayonnement incident accordé (L1),
le système comprenant de plus des moyens (18) de répartition spatiale du rayonnement incident accordé (L1) pour former un rayonnement accordé réparti,
le matériau phosphorescent (C) du dispositif (16) de conversion de longueur d'onde recevant le rayonnement accordé réparti.

4. Système d'éclairage selon les revendications 1 et 2 prises ensemble, dans lequel la première source lumineuse primaire (12) comprend une source laser formant support pour le matériau phosphorescent (C) du dispositif (16) de conversion de longueur d'onde et émettant le rayonnement accordé à travers ce matériau phosphorescent.

5. Système d'éclairage selon la revendication 1 ou la revendication 3, dans lequel les moyens (18) de répartition spatiale du rayonnement incident désaccordé (L2) ou accordé (L1) comprennent des moyens choisis parmi :
- des moyens de balayage (20) recevant le rayonnement incident désaccordé (L2) ou accordé (L1) et le répartissant spatialement sur une surface de balayage (22) du matériau phosphorescent du dispositif (16) de conversion de longueur d'onde, et
- des moyens de formation d'un faisceau volumique désaccordé ou accordé éclairant le matériau phosphorescent du dispositif (16) de conversion de longueur d'onde.

6. Système d'éclairage selon la revendication 5, dans lequel les moyens de balayage (20) comprennent un micro-miroir mobile autour de deux axes sensiblement orthogonaux ou deux micro-miroirs (26H, 26V) mobiles autour de deux axes respectifs (H, V) sensiblement orthogonaux.

7. Système d'éclairage selon l'une quelconque des revendications précédentes, dans lequel le rayonnement accordé (L1) a une longueur d'onde comprise entre 400 nanomètres et 500 nanomètres, et de préférence voisine de 450 ou 460 nanomètres, ces longueurs d'onde correspondant à des couleurs allant du bleu au proche ultraviolet.

8. Système d'éclairage selon l'une quelconque des revendications précédentes, comprenant un système optique d'imagerie (28) recevant la lumière réémise par le dispositif (66) de conversion de longueur d'onde et projetant cette lumière réémise, par exemple en avant du véhicule, pour former un faisceau d'éclairage, le dispositif (16) de conversion de longueur d'onde étant situé au voisinage d'un plan focal du système optique d'imagerie (28).
